(19) Europäisches Patentamt / European Patent Office / Office européen des brevets

(11) **EP 3 406 647 B2**

(12) **NEW EUROPEAN PATENT SPECIFICATION**
After opposition procedure

(45) Date of publication and mention
of the opposition decision:
**25.12.2024   Bulletin 2024/52**

(45) Mention of the grant of the patent:
**10.11.2021   Bulletin 2021/45**

(21) Application number: **17848104.0**

(22) Date of filing: **04.09.2017**

(51) International Patent Classification (IPC):
$C08G\ 63/183^{(2006.01)}$    $C08G\ 63/58^{(2006.01)}$
$C08G\ 63/52^{(2006.01)}$    $C08G\ 63/85^{(2006.01)}$
$C08G\ 63/181^{(2006.01)}$    $C08G\ 63/78^{(2006.01)}$

(52) Cooperative Patent Classification (CPC):
**C08G 63/183; C08G 63/85**

(86) International application number:
**PCT/CN2017/100370**

(87) International publication number:
**WO 2018/045931 (15.03.2018 Gazette 2018/11)**

(54) **PRODUCTION PROCESS FOR A PBAT RESIN**

VERFAHREN ZUR HERSTELLUNG EINES PBAT-HARZES

PROCÉDÉ DE PRÉPARATION D'UNE RÉSINE PBAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2016   CN 201610813803**

(43) Date of publication of application:
**28.11.2018   Bulletin 2018/48**

(73) Proprietors:
• **Zhuhai Wango Chemical Co., Ltd.**
**Zhuhai, Guangdong 519050 (CN)**
• **Kingfa Sci. & Tech. Co., Ltd.**
**Guangzhou, Guangdong 510663 (CN)**
• **Shanghai Kingfa Sci.&Tech.Co., Ltd.**
**Shanghai 201714 (CN)**

(72) Inventors:
• **WANG, Weiwei**
**Guangzhou**
**Guangdong 510663 (CN)**
• **YUAN, Zhimin**
**Guangzhou**
**Guangdong 510663 (CN)**
• **CAI, Tongmin**
**Guangzhou**
**Guangdong 510663 (CN)**
• **HUANG, Xianbo**
**Guangzhou**
**Guangdong 510663 (CN)**
• **ZENG, Xiangbin**
**Guangzhou**
**Guangdong 510663 (CN)**
• **YUAN, Renxu**
**Guangzhou**
**Guangdong 510663 (CN)**
• **GUO, Zhilong**
**Guangzhou**
**Guangdong 510663 (CN)**
• **TANG, Meijun**
**Guangzhou**
**Guangdong 510663 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
EP-A1- 2 881 415    EP-A1- 2 881 415
WO-A1-2006/097353    WO-A1-2009/135921
CN-A- 101 321 802    CN-A- 103 421 169
CN-A- 105 237 750    CN-A- 106 397 746

• **CHEN XIRONG, CHEN WEI, ZHU GUIXIANG,
HUANG FENGXING, ZHANG JINGCHANG:
"Synthesis,1H-NMR characterization, and
biodegradation behavior of aliphatic-aromatic
random copolyester", JOURNAL OF APPLIED
POLYMER SCIENCE, JOHN WILEY & SONS, INC.,
US, vol. 104, no. 4, 27 February 2007
(2007-02-27), US
, pages 2643 - 2649, ISSN: 0021-8995, DOI:
10.1002/app.25611**

EP 3 406 647 B2

• **GAN ET AL.: "Solid-state structures and thermal properties of aliphatic-aromatic poly(butylene adipate-co-butylene terephthalate) copolyesters", POLYMER DEGRADATION AND STABILITY, vol. 83, 2004, DOI: 10.1016/ S0141-3910(03)00274-X**

**Description**

**TECHNICAL FIELD**

The present invention belongs to the field of macromolecular synthesis, and specifically, relates to a preparation method of a polyester resin.

**BACKGROUND**

PBAT resin is a copolymer of butylene adipate and butylene terephthalate, having properties of both PBA and PBT, i.e. not only a relatively good ductility and an elongation at break, but also a relatively good heat resistance and an impact performance. Besides, it has an excellent biodegradable property, being one of the degradable materials that are very active and have the best market application in current research of biodegradable plastics. EP 2 881 415 A1 -discloses a method of preparation for a biodegradable co-polyester. This method including: forming an oligomer through a primary esterification reaction between a hydroxy group of an aliphatic dihydroxy compound and a carboxylic group of an aliphatic dicarboxylic acid compound; performing a secondary esterification reaction between the formed oligomer and an aromatic dicarboxylic acid compound; and performing a polycondensation reaction in a vacuum, in which sequentially divided addition of the aromatic dicarboxylic acid compound is performed and the weight ratio of the aromatic dicarboxylic acid compound with respect to the oligomer for each time of the sequentially divided addition is from 2:8 to 5:5. The method efficiently increases a solubility of aromatic dicarboxylic acid, thereby increasing a reaction rate and reducing a side reaction.

However, the PBAT resin also has following drawbacks: when the PBAT resin is made into a film material, the application of the film material will be affected since the film material has a relatively poor moisture-penetrability. At present, the moisture-penetrability of the film material is usually adjusted with a thickness of the film, such as a PE film. However, such adjustment has a certain drawback that material waste will be easily caused if it is too thick and mechanical properties of the material may be sacrificed if it is too thin. The present invention has discovered by research that, when the PBAT resin has a structure of $S_{\delta \text{ hydrogen on conjugated carbon chain}} / S_{\delta \text{ hydrogen on saturated carbon chain 1.2-2.4}}$ within a certain range, the PBAT resin exhibits a relatively good moisture-penetrability due to an effective control of a sequence length and a sequence randomness of a repeat unit in the molecular chain.

**SUMMARY OF THE INVENTION**

A primary object of the present invention is to provide a method for making a PBAT resin. The PBAT resin has $S_{\delta \text{ hydrogen on conjugated carbon chain}} / S_{\delta \text{ hydrogen on saturated carbon chain 1.2-2.4}}$ within a certain range, and has a significantly improved moisture-penetrability.

The present invention is accomplished by the following technical solution:

a preparation method for a PBAT resin, a structure of said PBAT resin satisfying a relation as follows:

- $S_{\delta \text{ hydrogen on conjugated carbon chain}} / S_{\delta \text{ hydrogen on saturated carbon chain 1.2-2.4}}$ = 0.1 to 0.35;
- wherein said $S_{\delta \text{ hydrogen on conjugated carbon chain}}$ is a total area of a peak integration of hydrogen on a conjugated carbon chain in a $^1$H NMR spectra, and said $S_{\delta \text{ hydrogen on saturated carbon chain 1.2-2.4}}$ is a total area of a peak integration of hydrogen on a saturated carbon chain and with a chemical shift between 1.2-2.4 ppm in the $^1$H NMR spectra,

the method comprising the following steps:

- (1) under an atmosphere of high purity nitrogen, putting metric adipic acid and 1,4-butanediol into a reactor, increasing a temperature to 160-180°C for reacting for 20-40 minutes;
- (2) putting terephthalic acid into the reactor, adding tetra--(2-ethylhexyl)titanate, increasing the temperature to 200-220°C for reacting for 1-2 hours, wherein an addition amount of terephthalic acid accounts for 40-60 wt% of a total amount of terephthalic acid, and an addition amount of tetra-(2-ethylhexyl)titanate accounts for 20-30 wt% of a total amount of tetra-(2-ethylhexyl)titanate;
- (3) putting the rest of terephthalic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and
- (4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the PBAT resin.

A ratio of $S_{\delta\ hydrogen\ on\ conjugated\ carbon\ chain}/S_{\delta\ hydrogen\ on\ saturated\ carbon\ chain\ 1.2\text{-}2.4}$ refers to a relation of the amount of substance of hydrogen on a conjugated carbon chain and hydrogen on a saturated carbon chain and with a chemical shift between 1.2-2.4 ppm in a molecular structure, which reflects a sequence length and a sequence randomness of a repeat unit in the molecular chain of PBAT. There are many factors affecting the ratio of $S_{\delta\ hydrogen\ on\ conjugated\ carbon\ chain}/S_{\delta\ hydrogen\ on\ saturated\ carbon\ chain\ 1.2\text{-}2.4}$. For example, differences in structure or proportion of raw material monomers, a degree of monomer self-polymerization, changes of a molecular weight and a sequence structure of the molecular chain, molecular chain segment being uniform or not, a degree of entanglement or branching of the molecular chain, the sequence length and the sequence randomness of the repeat unit in the macromolecular chain, molecular orientation arrangement and a crystal structure and preparation process (e.g. differences in catalysts), etc. will all affect the PBAT eventually prepared to have a large difference in molecular chain structure, and thereby lead to a significant difference in the ratio of $S_{\delta\ hydrogen\ on\ conjugated\ carbon\ chain}/S_{\delta\ hydrogen\ on\ saturated\ carbon\ chain\ 1.2\text{-}2.4}$.

The present invention has discovered by research that, when the PBAT resin has $S_{\delta\ hydrogen\ on\ conjugated\ carbon\ chain}/S_{\delta\ hydrogen\ on\ saturated\ carbon\ chain\ 1.2\text{-}2.4}$ = 0.1 to 0.35, a ratio of the amount of substance of hydrogen on a conjugated carbon chain and hydrogen on a saturated carbon chain and with a chemical shift between 1.2-2.4 ppm in a molecular structure is suitable. Since a sequence length and a sequence randomness of the repeat unit in the macromolecular chain are effectively controlled, when the PBAT resin is made into a thin film with a thickness of $25\pm1$ $\mu$m, a water vapor transmission thereof is 100-1500 g/m$^2$/d, thereby making the film material show a relatively good moisture-penetrability. $S_{\delta\ hydrogen\ on\ conjugated\ carbon\ chain}/S_{\delta\ hydrogen\ on\ saturated\ carbon\ chain\ 1.2\text{-}2.4}$ is lower than 0.1, the hydrogen on saturated carbon chain and with the chemical shift between 1.2-2.4 ppm has a relatively high amount of substance, and an excessive water vapor transmission, which is unfavorable to the development of a packaged product having undue moisture proof requirements, and is also unfavorable to the development of a product, such as an agricultural mulching film having undue water retention performance requirements. When $S_{\delta\ hydrogen\ on\ conjugated\ carbon\ chain}/S_{\delta\ hydrogen\ on\ saturated\ carbon\ chain\ 1.2\text{-}2.4}$ is higher than 0.35, the hydrogen on conjugated carbon chain in the molecular structure has a relatively high amount of substance, and a too low water vapor transmission, which is unfavorable to the development of a film material for food preservation.

Preferably, the structure of the PBAT resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.15\ to\ 0.3$$

More preferably, the structure of the PBAT resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.17\ to\ 0.28$$

Most preferably, the structure of the PBAT resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.18\ to\ 0.22$$

Preferably, a carboxyl group content in the PBAT resin is 50 moles per ton or less, preferably 30 moles per ton or less, and most preferably 25 moles per ton or less. When the carboxyl group content is relatively high, a water resistance of the PBAT resin becomes worse during preserving or processing, making a product quality have a tendency to become worse. When the carboxyl group content is too low, a process route becomes complicated, an equipment input is too high, and it is economically unfavorable.

Preferably, based on a total mass of the whole PBAT resin, a water content in the PBAT resin is 1-1000 ppm. With respect to the PBAT resin, by mass, there is no particular limitation on the lower limit of the water content, but it is usually 1 ppm or more, preferably 10 ppm-900 ppm, and most preferably 50 ppm-800 ppm or less. When the water content is too little, the process route becomes complicated, a drying time is also too long, it is economically unfavorable, and it may have a negative impact on color and other varieties. On the other hand, when the water content is too high, the PBAT resin will be hydrolyzed during preservation, which makes the product quality have a tendency to become worse.

When the PBAT resin prepared by the method of te the present invention is made into a thin film with a thickness of $25\pm1$ $\mu$m, a water vapor transmission thereof is 100-1500 g/m$^2$/d, preferably 150-1200 g/m$^2$/d, more preferably 180-1000 g/m$^2$/d, and most preferably 200-900 g/m$^2$/d.

The present invention provides a preparation method of the above-described PBAT resin, which comprises following steps:

- (1) under an atmosphere of high purity nitrogen, putting metric adipic acid and 1,4-butanediol into a reactor, increasing a temperature to 160-180°C for reacting for 20-40 minutes;
- (2) putting terephthalic acid into the reactor, adding tetra-(2-ethylhexyl)titanate, increasing the temperature to 200-220°C for reacting for 1-2 hours, wherein an addition amount of terephthalic acid accounts for 40-60 wt% of a total amount of terephthalic acid, and an addition amount of tetra-(2-ethylhexyl)titanate accounts for 20-30 wt% of a total amount of tetra-(2-ethylhexyl)titanate;

- (3) putting the rest of terephthalic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and

- (4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the PBAT resin.

Compared with the prior art, the present invention has following beneficial effects:

the present invention has discovered by research that, the structure of the PBAT resin obtained by the method of the present invention satisfies a relation: $S_{\delta\text{ hydrogen on conjugated carbon chain}} / S_{\delta\text{ hydrogen on saturated carbon chain 1.2-2.4}} = 0.1$ to $0.35$. Since a sequence length and a sequence randomness of a repeat unit in the macromolecular chain are effectively controlled, when the PBAT resin is made into a thin film with a thickness of $25\pm1\ \mu m$, a water vapor transmission thereof is 100-1500 $g/m^2/d$, making the prepared PBAT resin show a relatively good moisture-penetrability.

## DETAILED DESCRIPTION OF THE PREFERED EMBODIMENT

The present invention is further described below by specific embodiments. The following examples are preferred examples of the present invention, but the embodiments of the present invention are not limited by the following examples.

### Synthesis of a resin:

under an atmosphere of high purity nitrogen, metric adipic acid and 1,4-butanediol were put into a reactor, a temperature was increased to 160-180°C for reacting for 20-40 minutes; terephthalic acid was put into the reactor, tetra-(2-ethylhexyl)titanate was added, the temperature was increased to 200-220°C for reacting for 1-2 hours, wherein an addition amount of terephthalic acid accounted for 60 wt% of a total amount of terephthalic acid, and an addition amount of tetra-(2-ethylhexyl)titanate accounted for 30 wt% of a total amount of tetra-(2-ethylhexyl)titanate; the rest 40 wt% of terephthalic acid was put into the reactor, tetra-(2-ethylhexyl)titanate that accounted for 30 wt% of the total amount of tetra-(2-ethylhexyl)titanate was added, the temperature was increased to 220-230°C for reacting for 2-3 hours; then the rest of tetra-(2-ethylhexyl)titanate was added, the reactor was vacuumized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain the PBAT resin. Changing feeding amounts of adipic acid and terephthalic acid may achieve resins with different structures.

### Example 1:

Parts of adipic acid were 27.25, parts of 1,4-butanediol were 46.51, parts of terephthalic acid were 26.18, and parts of tetra-(2-ethylhexyl)titanate were 0.06.

### Example 2:

Parts of adipic acid were 30.39, parts of 1,4-butanediol were 46.7, parts of terephthalic acid were 22.85, and parts of tetra-(2-ethylhexyl)titanate were 0.06.

### Example 3:

Parts of adipic acid were 23.05, parts of 1,4-butanediol were 46.25, parts of terephthalic acid were 30.64, and parts of tetra-(2-ethylhexyl)titanate were 0.06.

### Example 4:

Parts of adipic acid were 31.25, parts of 1,4-butanediol were 46.78, parts of terephthalic acid were 21.91, and parts of tetra-(2-ethylhexyl)titanate were 0.06.

Example 5:

Parts of adipic acid were 21.81, parts of 1,4-butanediol were 46.17, parts of terephthalic acid were 31.96, and parts of tetra-(2-ethylhexyl)titanate were 0.06.

Example 6:

Parts of adipic acid were 33.14, parts of 1,4-butanediol were 46.87, parts of terephthalic acid were 19.93, and parts of tetra-(2-ethylhexyl)titanate were 0.06.

Example 7:

Parts of adipic acid were 19.05, parts of 1,4-butanediol were 46, parts of terephthalic acid were 34.89, and parts of tetra-(2-ethylhexyl)titanate were 0.06.

Example 8:

Parts of adipic acid were 38.26, parts of 1,4-butanediol were 47.18, parts of terephthalic acid were 14.5, and parts of tetra-(2-ethylhexyl)titanate were 0.06.

Comparative Example 1:

under an atmosphere of high purity nitrogen, metric adipic acid and 1,4-butanediol were put into a reactor, a temperature was increased to 160-180°C for reacting for 20-40 minutes; terephthalic acid was put into the reactor, tetra-(2-ethylhexyl)titanate was added, the temperature was increased to 200-220°C for reacting for 1-2 hours, then the temperature was increased to 220-230°C for reacting for 2-3 hours; then the reactor was vacuum ized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain a PBAT resin.

In particular, parts of adipic acid were 19.05, parts of 1,4-butanediol were 46, parts of terephthalic acid were 34.89, and parts of tetra-(2-ethylhexyl)titanate were 0.06.

Comparative Example 2:

In particular, parts of adipic acid were 38.26, parts of 1,4-butanediol were 47.18, parts of terephthalic acid were 14.5, and parts of tetra-(2-ethylhexyl)titanate were 0.06. The preparation technology was the same as Comparative Example 1.

**Testing method of ¹H spectra**

$S_{\delta \text{ hydrogen on conjugated carbon chain}}$ is a total area of a peak integration of hydrogen on a conjugated carbon chain in a 1 H NMR spectra, and $S_{\delta \text{ hydrogen on saturated carbon chain 1.2-2.4}}$ is a total area of a peak integration of hydrogen on a saturated carbon chain and with a chemical shift between 1.2-2.4 ppm in the ¹H NMR spectra. In a nuclear magnetic testing, after dissolving a sample with chloroform-d, a test was carried out at room temperature of 25°C using a German Bruker DRX-400 nuclear magnetic resonance spectrometer.

**Testing method of water vapor transmission:** the PBAT resin was made into a thin film of $25 \pm 1$ μm, and a water vapor transmission of a film material was tested using Test Dish Water Method under an environment at 40°C and with a relative humidity of 60% by ASTM E96 standard. Results of performance tests are shown as Table 1.

**Testing method of carboxyl group content:** a test was carried out according to regulations of a method A in GB/T14190-2008.

**Testing method of water content:** a test was carried out according to regulations of a method B in GB/T12006.2-2009.

Table 1. Results of performance tests of PBAT resins of Examples 1-8 and Comparative Examples 1-2

| | carboxyl group content: mol/T | water content: ppm | $S_\delta$ hydrogen on conjugated carbon $_{chain}$/$S_\delta$ hydrogen on saturated carbon chain 1.2-2.4 | water vapor transmission unit: $g/m^2/d$ |
|---|---|---|---|---|
| Example 1 | 15.3 | 250 | 0.22 | 200 |
| Example 2 | 17.2 | 210 | 0.18 | 880 |
| Example 3 | 23.7 | 450 | 0.28 | 180 |
| Example 4 | 24.6 | 400 | 0.17 | 940 |
| Example 5 | 25.9 | 850 | 0.3 | 150 |
| Example 6 | 29.8 | 20 | 0.15 | 1150 |

| | carboxyl group content: mol/T | water content: ppm | $S_\delta$ hydrogen on conjugated carbon$_{chain}$/$S_\delta$ hydrogen on saturated carbon chain 1.2-2.4 | water vapor transmission unit: $g/m^2/d$ |
|---|---|---|---|---|
| Example 7 | 42.1 | 960 | 0.35 | 110 |
| Example 8 | 47.9 | 970 | 0.1 | 1350 |
| Comparative Example 1 | 42.1 | 960 | 0.37 | 75 |
| Comparative Example 2 | 47.9 | 970 | 0.08 | 1600 |

It may be seen from Examples 1-8 and Comparative Examples 1-2 in Table 1 that, a structure of the PBAT resin satisfies a relation: $S_{\delta\ hydrogen\ on\ conjugated\ carbon\ chain}$/$S_{\delta\ hydrogen\ on\ saturated\ carbon\ chain\ 1.2-2.4}$ = 0.1 to 0.35. When the PBAT resin is made into a thin film with a thickness of $25\pm1$ μm, a water vapor transmission thereof is 100-1500 $g/m^2/d$. When a value of $S_{\delta\ hydrogen\ on\ conjugated\ carbon\ chain}$/$S_{\delta\ hydrogen\ on\ saturated\ carbon\ chain\ 1.2-2.4}$ is greater than 0.35 or less than 0.1, while the PBAT resin is made into a thin film with a thickness of $25\pm1$ μm, its water vapor transmission is too low or too high, showing a relatively poor moisture-penetrability.

## Claims

1. A preparation method of a PBAT resin wherein the structure of the PBAT resin satisfies a relation as follows:

$$S_{\delta\ hydrogen\ on\ conjugated\ carbon\ chain}\ /\ S_{\delta\ hydrogen\ on\ saturated\ carbon\ chain\ 1.2-2.4} = 0.1\text{-}0.35;$$

wherein said $S_{\delta\ hydrogen\ on\ conjugated\ carbon\ chain}$ is a total area of a peak integration of hydrogen on a conjugated carbon chain in a $^1H$ NMR spectra, and said $S_{\delta\ hydrogen\ on\ saturated\ carbon\ chain\ 1.2-2.4}$ is a total area of a peak integration of hydrogen on a saturated carbon chain and with a chemical shift between 1.2-2.4 ppm in the $^1H$ NMR spectra, wherein a testing method of the $^1H$ NMR spectra is: after dissolving a sample with chloroform-d and carrying out a test at room temperature of 25°C and
wherein the testing method of the $^1H$ NMR spectra using a German Bruker DRX-400 nuclear magnetic resonance spectrometer
, **characterized in that**, the preparation method comprises following steps:

(1) under an atmosphere of high purity nitrogen, putting metric adipic acid and 1,4-butanediol into a reactor, increasing a temperature to 160-180°C for reacting for 20-40 minutes;
(2) putting terephthalic acid into the reactor, adding tetra-(2-ethylhexyl)titanate, increasing the temperature to 200-220°C for reacting for 1-2 hours, wherein an addition amount of terephthalic acid accounts for 40-60 wt% of a total amount of terephthalic acid, and an addition amount of tetra-(2-ethylhexyl)titanate accounts for 20-30 wt% of a total amount of tetra-(2-ethylhexyl)titanate;
(3) putting the rest of terephthalic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and

(4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the PBAT resin.

## Patentansprüche

**1.** Herstellungsverfahren für ein PBAT-Harz, wobei die Struktur des PBAT-Harzes die folgende Beziehung erfüllt:

$S_\delta$ Wasserstoff an konjugierter Kohlenstoffkette/Sö Wasserstoff an gesättigter Kohlenstoffkette 1.2-2.4 - 0,1 bis 0,35;

wobei das $S_{\delta\ \text{Wasserstoff an konjugierter Kohlenstoffkette}}$ eine gesamte Flache einer Spitzenintegration von Wasserstoff an einer konjugierten Kohlenstoffkette in einem $^1$H-NMR-Spektrum ist und das $S_{\delta\ \text{Wasserstoff an gesättigter Kohlenstoffkette 1.2-2.4}}$ eine gesamte Flache einer Spitzenintegration von Wasserstoff an einer gesättigten Kohlenstoffkette und mit einer chemischen Verschiebung zwischen 1,2-2,4 ppm im $^1$H-NMR-Spektrum ist, wobei ein Prüfverfahren des $^1$H-NMR-Spektrums ist: nach Auflösen einer Probe mit Chloroform-d und Durchführen eines Versuchs bei Raumtemperatur von 25°C und

wobei das Prüfverfahren des $^1$H-NMR-Spektrums unter Verwendung eines deutschen Bruker DRX-400-Kernspinresonanzspektrometers durchgeführt wird,

**dadurch gekennzeichnet, dass** das Herstellungsverfahren die folgenden Schritte umfasst:

(1) unter einer Atmosphäre aus hochreinem Stickstoff Einbringen von metrischer Adipinsäure und 1,4-Butandiol in einen Reaktor, Erhöhen der Temperatur auf 160-180°C zum Reagieren für 20-40 Minuten;

(2) Einbringen von Terephthalsäure in den Reaktor, Zugeben von Tetra(2-ethylhexyl)titanat, Erhöhen der Temperatur auf 200-220°C zum Reagieren für 1-2 Stunden, wobei eine Zugabemenge von Terephthalsäure 40-60 Gew.-% einer Gesamtmenge der Terephthalsäure ausmacht und eine Zugabemenge von Tetra(2-ethylhexyl)titanat 20-30 Gew.-% einer Gesamtmenge des Tetra(2-ethylhexyl)titanats ausmacht;

(3) Einbringen der restlichen Terephthalsäure in den Reaktor, Zugeben von Tetra(2-ethylhexyl)titanat, das 20-30 Gew.-% der Gesamtmenge des Tetra(2-ethylhexyl)titanats ausmacht, Erhöhen der Temperatur auf 220-230°C zum Reagieren für 2-3 Stunden; und

(4) anschließendes Zugeben des Rests des Tetra(2-ethylhexyl)titanats, Vakuumieren des Reaktors auf einen Innendruck von 100 Pa oder weniger in 2 Stunden, Umsetzen bei 230-260°C für 2-4 Stunden, Beenden des Rührens, Füllen des Reaktors mit hochreinem Stickstoff und Extrudieren eines Harzes aus dem Reaktor und Pelletieren des Harzes, um das PBAT-Harz zu erhalten.

## Revendications

**1.** Procédé de préparation d'une résine PBAT, dans laquelle la structure de la résine PBAT satisfait à une relation comme suit :

$S_\delta$ hydrogène sur la chaîne carbonée conjuguée/$S_\delta$ hydrogène sur la chaîne carbonée saturée $_{1.2-2.4}$ - 0,1 à 0,35 ;

dans laquelle ladite valeur $S_{\delta\ \text{hydrogène sur la chaîne carbonée conjuguée}}$ est une aire totale d'une intégration de pic d'hydrogène sur une chaîne carbonée conjuguée dans un spectre de RMN-$^1$H, et ladite valeur $S_{\delta\ \text{hydrogène sur la chaîne carbonée saturée 1.2-2.4}}$ est une aire totale d'une intégration de pic d'hydrogène sur une chaîne carbonée saturée et avec un déplacement chimique entre 1,2-2,4 ppm dans le spectre de RMN-$^1$H, dans laquelle une méthode d'essai du spectre de RMN-$^1$H est : après dissolution d'un échantillon avec du chloroforme-d et exécution d'un essai à la température ambiante de 25 °C et

dans laquelle la méthode d'essai du spectre de RMN-$^1$H est effectuée en utilisant un spectromètre de résonance magnétique nucléaire allemand Bruker DRX-400,

**caractérisé en ce que** le procédé de préparation comprend les étapes suivantes consistant à :

(1) sous une atmosphère d'azote de grande pureté, introduire dans un réacteur de l'acide adipique et du 1,4-butanediol métriques, élever une température jusqu'à 160-180°C pour faire réagir pendant 20-40 minutes ;

(2) introduire dans le réacteur de l'acide téréphtalique, ajouter du titanate de tétra-(2-éthylhexyle), élever la température jusqu'à 200-220 °C pour faire réagir pendant 1-2 heures, une quantité d'addition de l'acide téréphtalique représentant 40-60 % en poids d'une quantité totale de l'acide téréphtalique, et une quantité d'addition de titanate de tétra-(2-éthylhexyle) représentant 20-30 % en poids d'une quantité totale de titanate de tétra-(2-éthylhexyle) ;

(3) introduire dans le réacteur le reste de l'acide téréphtalique, ajouter du titanate de tétra-(2-éthylhexyle) qui représente 20-30 % en poids de la quantité totale de titanate de tétra-(2-éthylhexyle), élever la température jusqu'à 220-230 °C pour faire réagir pendant 2-3 heures ; et

(4) ensuite ajouter le reste du titanate de tétra-(2-éthylhexyle), faire le vide dans le réacteur pour avoir une pression interne de 100 Pa ou moins en 2 heures, faire réagir à 230-260 °C pendant 2-4 heures, arrêter l'agitation, introduire dans le réacteur de l'azote de grande pureté, et extruder une résine à partir du réacteur et granuler la résine pour obtenir la résine PBAT.

**EP 3 406 647 B2**

## REFERENCES CITED IN THE DESCRIPTION

**Patent documents cited in the description**

- EP 2881415 A1